# EUROPEAN PATENT SPECIFICATION

(11) **EP 2 113 421 B1**
(45) Date of publication and mention of the grant of the patent: **18.04.2012**
(21) Application number: 09380084.5
(22) Date of filing: 22.04.2009
(51) Int. Cl.: B60R 9/04, B60R 9/058, F16B 5/02

(54) **Anchor for vehicle roof racks**
Anker für Fahrzeugdachgepäckträger
Ancrage pour galerie de toit de véhicule

(30) Priority: 30.04.2008 ES 200800910 U; 07.10.2008 ES 200802028 U
(43) Date of publication of application: 04.11.2009
(73) Proprietor: Seat, S.A., 08760 Martorell, Barcelona (ES)
(72) Inventor: Carrascosa Rodriguez, Alberto, 08760 Martorell, Barcelona (ES)
(74) Representative: Carvajal y Urquijo, Isabel

(56) References cited:
- EP-A- 1 533 185
- DE-A1- 3 932 193
- DE-U1-202004 018 079

## Description

### FIELD OF THE INVENTION

The present invention refers to an anchor for vehicle roof racks, designed to fix the rack to the flanks of the vehicle roof.

More specifically, the anchor of the invention is designed as a means to enable to safely fix a rack to the plate or plates which constitute the flank reinforcements of a vehicle roof and the roof itself, through opposing holes of said plates.

### BACKGROUND OF THE INVENTION

Nowadays, most rack mounting is carried out on vehicle roofs.

Generally, the mounting of the rack is carried out on the roof flanks and more specifically on one or two plates, an upper one and a lower one, which function as reinforcement of said flanks. The rack is fixed using screws, from the inside of the vehicle, through opposing holes of said plates.

Current automobile body design, and more specifically roof design, with its curves, prevents the rack from resting perfectly on the roof surface, causing allowances between the different pieces to be joined together, which forces to excessively tighten the screws, up to a point which causes deformations in the rack or roof, through which the rack is fitted.

These mountings can give rise to one of the following two situations.
- If the sum of the allowances of the assembly is positive, then an oversize is obtained, which separates the part from the supporting base, making it necessary to apply an overstrain in an attempt to correct this, with the risk of deforming the supporting base, besides not maintaining the constant relief or failing to correct the situation.
- If the sum of the allowances of the assembly is negative, there is a lack of support on the base, which generates a less rigid system, making it impossible to keep constant the relief between the parts.

In DE 2020040/8079 U1 is an anchor element for a vehicle roof rack described according to the preamble of claim 1.

### DESCRIPTION OF THE INVENTION

The object of the present invention is to eliminate the aforementioned problems by means of an anchor which enables to achieve a rack mounting with a perfect fit, through which it can be attained a continuous support without allowances between the rack, the vehicle roof and the plates forming the flank reinforcements of said roof.

The anchor of the invention enables to compensate all possible mounting allowances between the parts, keeping a constant relief between the rack and the outer surface of the vehicle roof, generating a rigid system and facilitating rack mounting operations.

The anchor of the invention is designed to fix a rack to the upper and lower plates of the roof flanks of a vehicle, through the opposing holes of said plates, in the support and anchor areas of the rack.

The anchor of the invention includes a nut, located under the lower plate of the roof flank, and a headed screw, which goes through each beam of the rack, the upper and lower plates of the flanks and is screwed in the aforementioned nut.

According to the invention, the anchor also comprises an allowance compensator, located between the upper and lower plates of the flanks, and through which the aforementioned binding screw of the rack will be inserted.

The compensator comprises two coaxial threaded bushings -an upper outer one and a lower inner one- and an upper crown anchored on the outside on the upper outer bushing and located at the level of the upper plate of the flanks, with means to limit its axial movement with respect to said plate. The length of the coaxial threaded bushings can vary by the relative rotation between them, being possible to reach a retracted position, of maximum coupling, in which the length of the compensator is smaller than the distance between the upper and lower plates of the flanks, and an extended position, in which the length of the compensator is the same as the distance between said plates, against which it rests in opposite directions through the upper crown and the lower bushing, to define the passage of the screw which can be screwed to the nut.

The upper crown includes a cylindrical wall, which is exteriorly coupled on the upper outer bushing and has fixing means to said bushing. These means can consist of tabs whose radiuses protrude from the inside of the crown wall and are designed to be inserted in a peripheral exterior channel of the upper outer bushing.

As regards the means to limit the axial movement of the crown with respect to the upper plate of the flanks, they consist of a peripheral wing protruding from the crown cylindrical wall, adjacent to its upper edge, and two flaps parallel to the upper wing, diametrically opposed, which protrude in a position adjacent to the lower edge of said cylindrical wall. The peripheral wing is intended to downwardly rest against the upper plate of the flanks, and to that end it has an edge bigger than that of the holes of the upper plate for the passage of the binding screw. This peripheral wing will prevent the compensator from moving downwards. The wings rest upwardly against the same upper plate of the flanks, when the bushings are in the extended position, to define the means preventing the upward movement of the compensator.

The hole of the upper plate for the passage of the screw and the wings of the bushing adjacent to the lower edge thereof have coinciding oblong edges, so that said wings can be inserted through the hole of the upper plate in a certain position, while when the compensator is turned 90° they will rest upwardly against the plate to define the means preventing the upward movement of the compensator, as indicated before.

The reinforcement of the flanks of the vehicle roof can comprise only one plate, arranged in a way corresponding to the lower reinforcement plate, acting the vehicle roof as an upper plate.

The mounting of the anchor described will be carried out in the vehicle assembly line, once the roof has been completed with the corresponding flank reinforcements.

As an embodiment variant, the allowance compensator can comprise a lower nut, substituting the lower inner bushing and arranged on the lower reinforcement plate, coinciding with each hole for the passage of the binding screw, a retention cage of said nut, upwardly fixed to the lower reinforcement plate and clasping the nut, and the upper bushing, threaded on the outside to be screwed in the aforementioned nut, and having an upper external stop to rest upwardly against the upper reinforcement plate or the vehicle roof.

### BRIEF DESCRIPTION OF THE DRAWINGS

The attached drawings show a non-limiting example of an embodiment of the anchor of the present invention, and their description will help understand better the constitution, characteristics and advantages thereof, wherein:
Figure 1 shows an upper plant view of an automobile, showing the position of the flanks, along which the upper and lower reinforcement plates of said flanks are found.
Figure 2 is a perspective exploded view of the end of a rack when fixed to the roof of a vehicle, with the anchor of the invention.
Figure 3 is a perspective exploded view of the compensator which forms part of the anchor of the invention.
Figure 4 shows the anchor of the invention mounted between the upper and lower reinforcement plates of the flanks of the automobile roof.
Figure 5 shows a diametrical section of the anchor of the invention, when mounted as shown in figure 4.
Figure 6 shows an upper plant view of the compensator of the anchor of the invention, in mounting position through the upper reinforcement plate of the flanks.
Figure 7 shows a similar view to figure 6, with the compensator in operational position.
Figure 8 shows a diametrical section of the compensator in mounting position, taken according to a section line VIII-VIII of figure 6.
Figure 9 is a diametrical section of the compensator, when mounted, taken according to the section line IX-IX of figure 7, with the compensator turned 90° with respect to the position of figure 8.
Figure 10 shows a diametrical section of the compensator in mounting position, taken according to a section line X-X of figure 7.
Figure 11 shows a diametrical section like the one in figure 10, showing the compensator in operational position.
Figure 12 shows a diametrical section of the anchor of the invention, when being mounted with the help of an auxiliary tool.
Figure 13 shows a sectional view of a rack fixed on a vehicle roof, using the anchor of the invention.
Figure 14 shows a similar sectional view to that of figure 5, showing an embodiment variant.
Figure 15 shows an exploded perspective view of the allowance compensator of the anchor in figure 14.
Figures 16 and 17 show sectional views similar to figure 14, which show the mounting of the allowance compensator on the vehicle roof with only one reinforcement plate.

### DETAILED DESCRIPTION OF AN EMBODIMENT

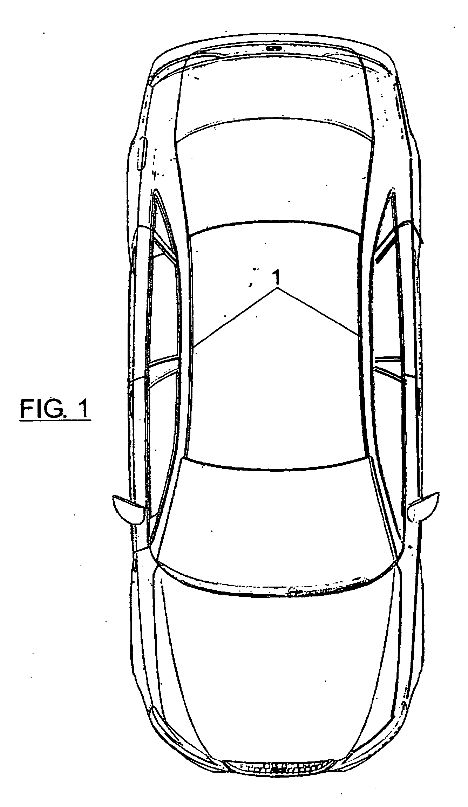

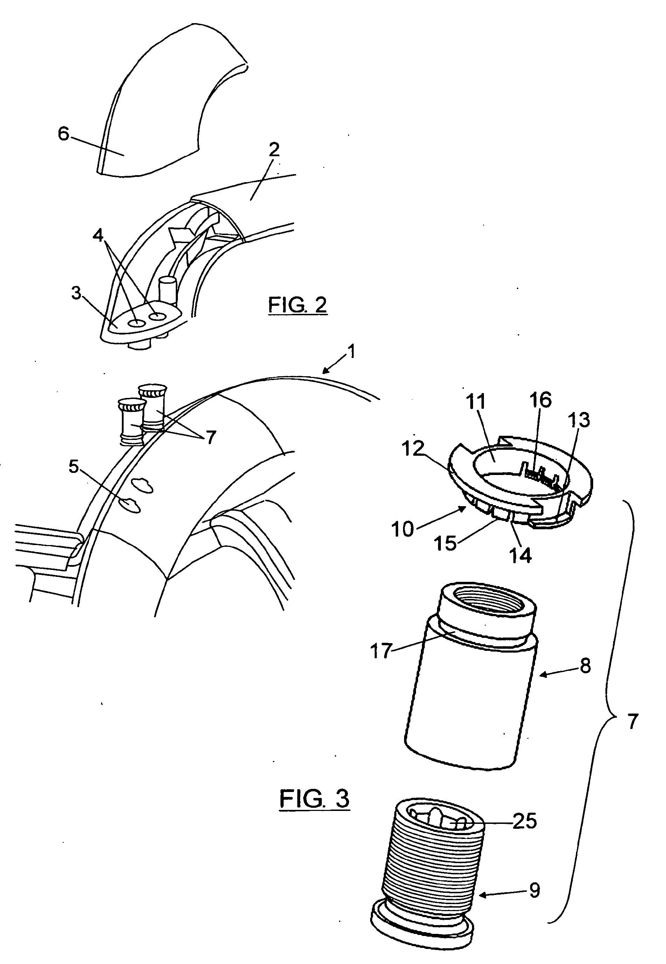

Figure 1 shows a plant view of an automobile, in the roof of which there are indicated with reference 1 the roof flanks on which a rack is mounted, which, as shown in figure 2, can include beams 2 whose ends form supports 3 with holes 4 through which the screws are fitted and inserted through holes 5 of the flanks for their fixing by means of an inner nut. The beams 2 of the rack can have a lid 6 to access the holes 4 of the supports 3.

The anchor of the invention includes, for each binding screw inserted through holes 4 and 5, an allowance compensator 7 which, as shown in figure 3, comprises an upper outer bushing 8, a lower inner bushing 9 and an upper crown 10. The bushings 8 and 9 are coaxially threaded to each other, being possible to control the length defined by both of them by the relative rotation between them in one direction or another.

The crown 10 comprises a cylindrical wall 11, mounted around the upper end of the upper outer bushing 8. From this cylindrical wall 11 there protrudes a peripheral wing 12, adjacent to the upper edge of said wall, and two diametrically opposed flaps 13, parallel to the peripheral wing 12 and adjacent to the lower edge of the wall 11.

The wall 11 also has, in the section of the wall between the flaps 13, axial cuts 14 defining pins 15 which have an inner flange or tab 16 to be inserted in the outer peripheral channel 17 of the upper outer bushing 8. In this way, the upper crown 10 is coupled and fixed in the upper end of the upper outer bushing 8.

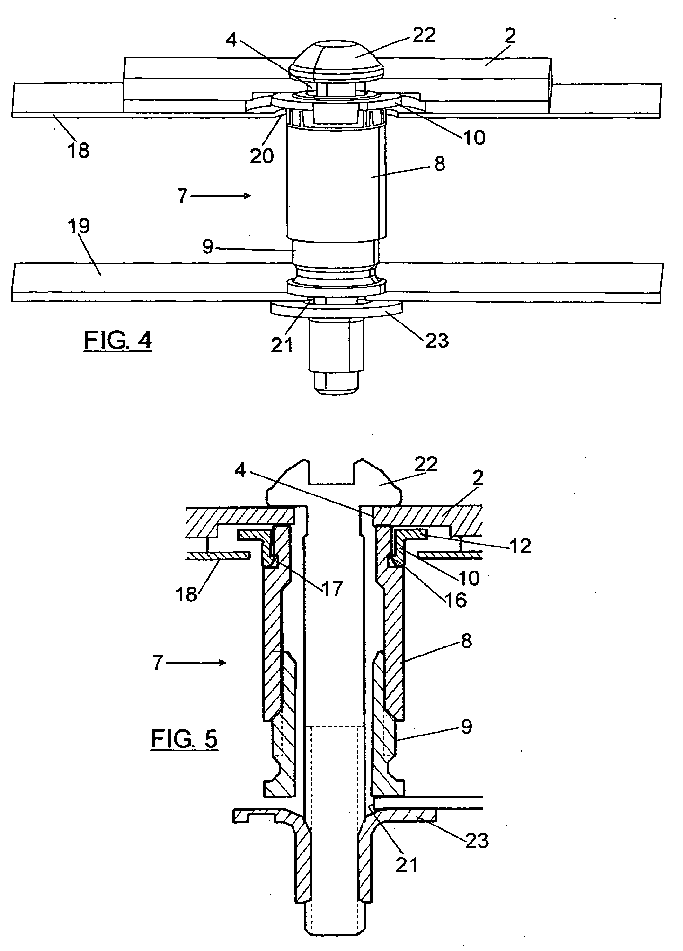

As it can be seen in figure 4, the flanks 1 of the vehicle roof, figure 1, are reinforced by an upper plate 18 and a lower plate 19, which has opposing holes 20 and 21 for the passage of a binding screw 22, which is previously inserted through one of the holes 4 of the supports 3 of the rack beams 2, and fastened by a nut 23, located under the lower reinforcement plate 19 of the flank. The bushings 8 and 9 are turned to reach a maximum extension in which the lower outer bushing 9 rests downwardly against the lower reinforcement plate 19 of the flank, while the upper crown 10 rests upwardly, through the flaps 13, against the upper reinforcement plate 18 of the flank, as it will be explained later.

Figure 5 shows a diametrical sectional view of the anchor of the invention, in the operational position shown in figure 4, and it can be seen how the tabs 16 of the upper crown are housed in the channel 17 of the upper outer bushing 8.

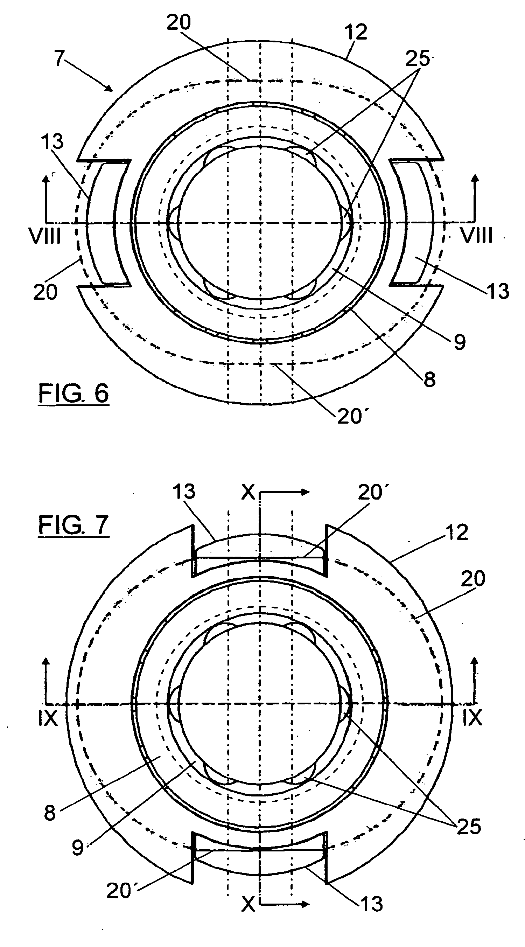

The mounting of the anchor of the invention is now explained with reference to figures 6 to 11.

Figure 6 shows the hole 20 of the upper plate of the flanks, which has an oblong shape.

It also shows the peripheral wing 12 of the upper crown 10, which has a larger outline than the maximum outline of the oblong hole 20. The flaps 13 of the upper crown, in turn, define an outline which is smaller than the maximum width of the hole 20 but smaller than the minimum width of the oblong hole 20, represented by areas 20'. The upper outer bushing 8 and lower inner bushing 9 of the compensator have a smaller diameter than the minimum width defined by the areas 20' of the opening 20.

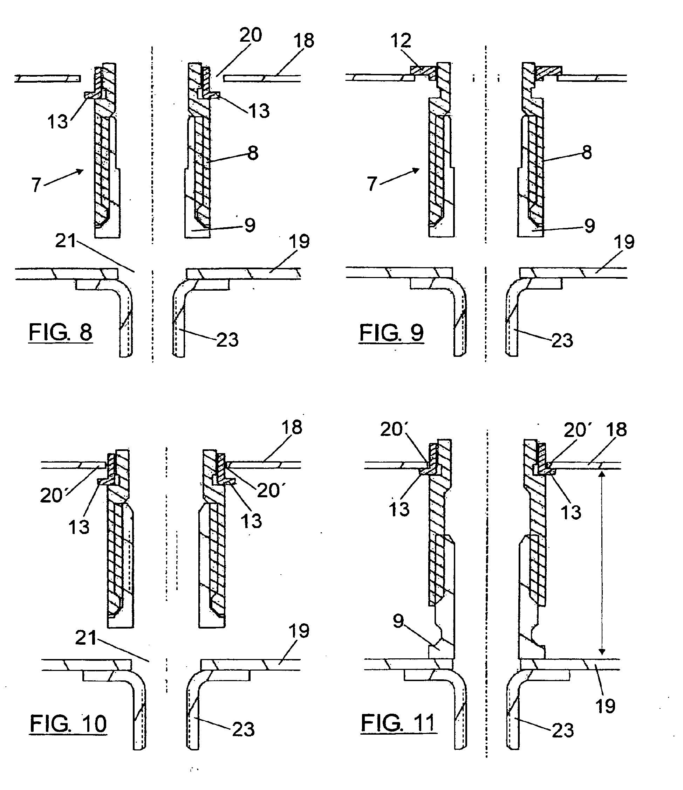

With this arrangement, the upper outer bushing 8 and the lower inner bushing 9 of the compensator can be inserted through holes 20 of the upper reinforcement plate 18 of the roof flanks, as it can be seen in figure 8, hanging from the peripheral wing 12, as shown in figure 9.

From this opposition and through a 90° rotation of the compensator, it is attained that the flaps 13 be located in a position coinciding with the sections 20' of the opening 20 which determine the narrower area of said opening, thus occupying the position shown in figures 7 and 10. In this situation, if the upper outer bushing 8 and the lower inner bushing 9 are turned against each other, so that the length defined by them increases, the position shown in figure 11 is achieved. In said position, the flaps 13 rest upwardly against the upper reinforcement plate 18 of the flank, while the lower inner bushing 9 rests downwardly against the lower reinforcement plate 19 of the flank. In this situation, it is possible to insert the screw 22, figure 4, which is screwed to the nut 23, to fix the rack beam 2.

As it can be seen in figures 6, 7 and 12, the lower inner bushing 9 has from its inner surface axial grooves 25 on which the notches 26 of a rib-shaped tool 27 can be coupled. With this tool it is possible to turn the compensator 7 from the mounting position in figures 6 and 8, to the operational position in figures 7, 10 and 11. The tool 27 can also be used to make the relative rotation between the upper outer bushing 8 and the lower inner bushing 9, until the fastening position shown in figure 11 is reached, and also to secure the initial alignment position between the compensator 7 and the holes 20 and 21 of the upper and lower reinforcement plates 18 and 19 of the roof flanks.

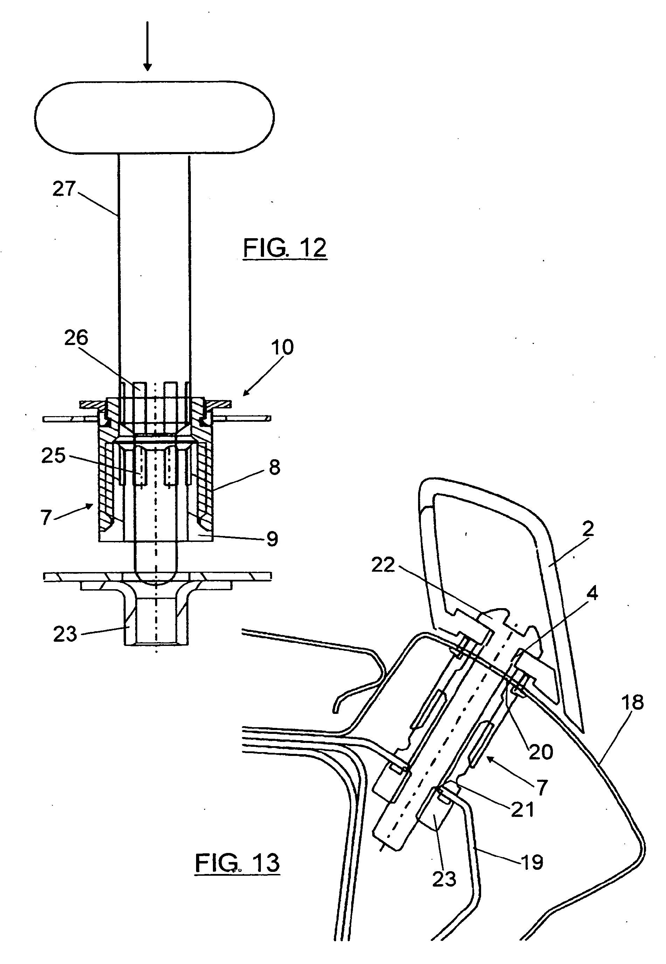

Finally, figure 13 shows the final mounting position of a rack, showing one of its beams 2, with the screw 22 inserted through the holes 4 of the beam 2 supports 3, as well as through the holes 20 and 21 of the upper and lower reinforcement plates 18 and 19 of the flanks of the automobile roof, being the screw 22 screwed on the nut 23 after going through the bushings forming the compensator 7, once said compensator has been extended until resting against the upper and lower plates 18 and 19, as it has already been described.

The nut 23 can be welded to the lower reinforcement plate 19, at its lower surface.

The tool 27, described with reference to figure 12, by fixing its free end into the nut 23, secures the correct positioning of the compensator 7.

When the anchor of the invention reaches the position in figure 11, with the allowance compensator firmly resting between the upper and lower reinforcement plates 18 and 19 of the flanks, a rigid assembly of effort transmission and constant support will be achieved to keep the relief of the rack in its fixing position to the flank.

The anchor described is designed to be mounted on the roof of a vehicle in the vehicle assembly line.

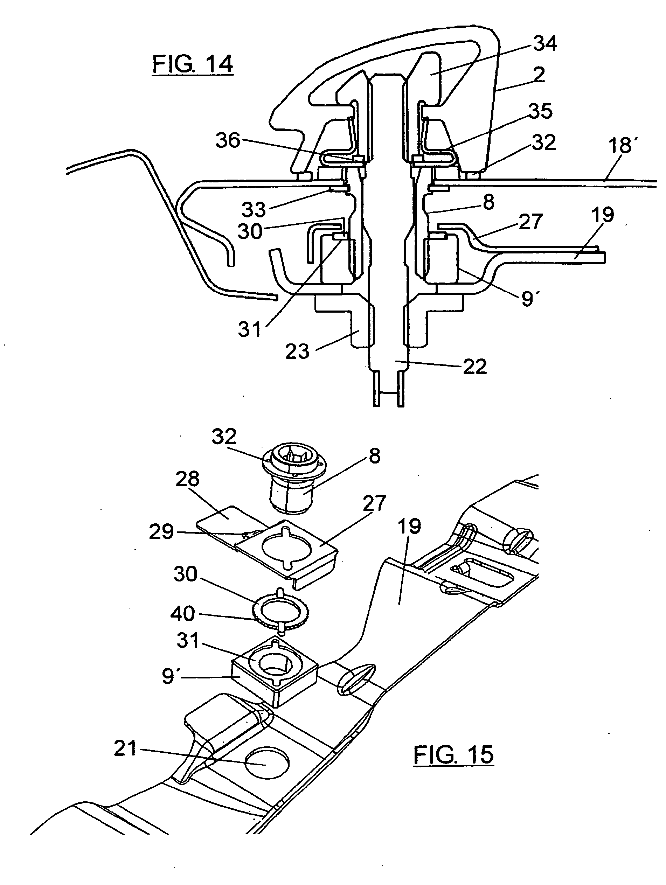

According to an embodiment variant shown in figures 14 to 17, part of the anchor and more specifically part of the two components of the allowance compensator, is mounted on the reinforcement beams, forming part thereof, before mounting said beams on the roof. These components can be mounted on the roof beams by the beam provider.

In the example of figures 14 to 17 the upper plate of the beams is replaced by the vehicle roof 18'.

As in the example shown in figures 2 to 13, the anchor for the bars 2 of the rack includes a binding screw 22 and an allowance compensator which, in this case, comprises a nut 9' replacing the lower inner bushing 9 of the previous anchor, an upper bushing 8 and a metallic cage 27, which serves to fasten the nut 9' to the reinforcement beam 19.

As it can be seen better in figure 13, the square nut 9' is arranged, coinciding with each one of the holes 21, on the reinforcement plate 19 that it will face, a hole of the vehicle roof sheet 18' and a hole 4 of the bar 21 of the rack. The nut 9' is mounted on the reinforcement plate 19 through the metallic cage 27, for example made of sheet, which can have a lateral flange 28 fixed to the reinforcement beam 19 through a welding point 29.

Between the cage 27 and the nut 9' there is a plastic ring 30. For that, the nut can have on its upper base, around the hole through which the screw 22 is inserted, an annular recess 31 on which the ring 30 is coupled, as it can be seen in figure 14, being the recess 31 depth smaller than the thickness of the ring 30, so that the support of the cage 27 is secured on the nut 9' through the plastic ring 30.

The upper bushing 8 is threaded on the outside to thread the nut 9', as shown in figure 14. The bushing 8 has an upper annular stop equivalent to the wing 12 of the upper crown 10 of figure 3, which will serve as supporting means against the sheet 18 of the vehicle roof, in an upward direction, as shown in figure 14.

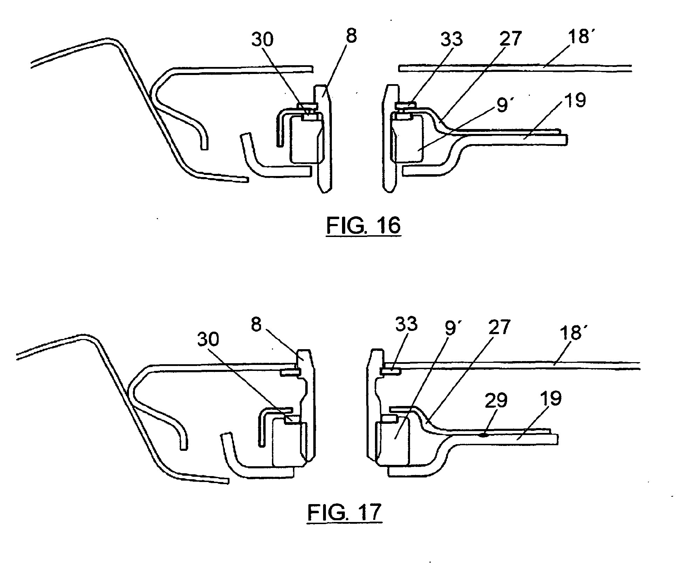

With the arrangement described, the allowance compensator, comprising the nut 9', the upper bushing 8 and the cage 27, forms part of the reinforcement beam 19, and it can be provided with it. The mounting of the reinforcement beam 19 on the vehicle roof will be carried out traditionally, as shown in figure 16, and it will include the allowance compensator. Once said reinforcement beam is mounted, the upper bushing 8 is turned until the upper part of a ring 33 rests against the roof 18' sheet; being the outer part of said ring fixed on said bushing, close to the upper edge thereof, for example in an outer neck made on said bushing. In this way, the upper part of the allowance compensator is pressed against the sheet 18' of the roof and its lower part is pressed against the reinforcement beam 19.

For the mounting of the rear part of the rack, as shown in figure 14, the bars 2 of said rack are placed and fixed using a upper nut 34 and a lower nut 23 which press the bar 2 downwardly, against the sheet 18' of the roof, and the reinforcement beam 19 upwardly, against the allowance compensator.

The mounting of the bars 2 of the rack can include a clip 35 and rings 36 and 39, and the rings 33, 36 and 39 can also be made of plastic, like the ring 30.

In this way, the ring 30 serves two functions:
- On one hand, it works as dielectric element between the upper bushing and the metallic cage 27, together with the upper ring 32: With this assembly, it is possible to electrically insulate the compensator, preventing the cataphoresis treatment from attaching itself to the thread, thus preventing said thread from stopping.
- On the other hand, it serves as positioning element between the nut 9' and the metallic cage 27 locating the compensator in such a way that it avoids contact with the parts surrounding it. As it can be appreciated better in figure 15 the ring 30 has a cogged 40 which can be deformed when inserted in the metallic nut 9'.

The entire compensator assembly will go through the cataphoresis and painting process, which will not affect its mechanical and functional properties. With the aforementioned technique for fixing the assembly, the time required for mounting and screwing the rack supports is eliminated as well as the compensator mounting.

Each one of the rack bars 2 is mounted on the roof using four allowance compensators, arranged in a position coinciding with the corresponding holes for inserting the corresponding binding screws 22.

## Claims

1. Anchor for vehicle roof racks, for fixing it to the upper (18) and lower (19) reinforcement plates of the vehicle roof flanks, through opposing holes (20 and 21) of said plates, comprising a nut (23) under the lower plate (19) of the roof flank and a headed screw (22) which, through the holes (4) of each rack beam (2), the holes (20 and 21) of the reinforcement plates (18 and 19) of the flanks, is screwed in the aforementioned nut (23), and an allowance compensator (7) to be located between the upper (18) and lower reinforcement plates (19) of the flanks and through which the aforementioned screw passes; said compensator in turn comprises two coaxial threaded bushings, an upper one (8) and a lower one (9), and **characterized in that** the compensator also includes an upper crown (10) anchored on the outside on the upper outer bushing (8) and located at the level of the upper reinforcement plate of the flanks, with means to limit its axial movement with respect to said upper plate; the length of the two bushings being variable by the relative rotation between them, from a retracted position of maximum coupling, in which said length is smaller than the distance between the upper (18) and lower reinforcement plates (19) of the flanks, and an extended position, in which the length occupied is the same as the distance between said plates, against which it rests in opposite directions through the upper crown (10) and the lower bushing (9).

2. Anchor according to claim 1, **characterized in that** the lower bushing (9) is screwed inside the upper bushing (8).

3. Anchor according to claim 1, **characterized in that** the upper crown (10) comprises a cylindrical wall (11) coupled on the outside on the upper outer bushing (8) and provided with means for fixing it to said bushing.

4. Anchor according to claim 3, **characterized in that** the upper crown (10) fixing means to the upper outer bushing (8) consist of tabs (16) whose radiuses protrude from the inside of the crown wall (11) and are inserted in a peripheral exterior channel (17) of the upper outer bushing (8).

5. Anchor according to claims 1 and 3, **characterized in that** the means limiting the axial movement of the upper crown (10), with respect to the upper reinforcement plate (18) of the flanks, consist of a peripheral wing (12) protruding from the cylindrical wall (11) of the crown, in a position adjacent to its upper edge, and two flaps (13) parallel to the upper wing, diametrically opposed, protruding in a position adjacent to the lower edge of said cylindrical wall; whose peripheral wing rests downwardly against the upper reinforcement plate (18) of the flanks, to define the means preventing the downward movement of the compensator, in the restrained position of the bushings; and whose flaps (13) rests upwardly against the same plate, when the bushings have the aforementioned extended position, defining the means preventing the upward movement of the compensator.

6. Anchor according to claim 1, **characterized in that** the lower inner bushing (9) has inner axial grooves (25) to couple a tool (27), which is used to rotate said bushing.

7. Anchor according to claims 1 and 5, **characterized in that** the openings of the upper reinforcement plate (18) of the flanks for the passage of the binding screw are oblong, with opposing areas which determine a maximum width which is at least equal to the diameter of the peripheral wing (12) of the upper bushing (2) and with opposing areas which define the highest and lowest maximum and minimum widths, respectively, that the outline defined by the outer edge of the flaps (13) of said upper crown (10).

8. Anchor according to claim 1, **characterized in that** the lower bushing comprises a nut (9') which is screwed outside the upper bushing (8) and is placed on the lower reinforcement plate (19), coinciding with each hole (21) for the passage of a binding screw (22); having said upper bushing (8) an upper external stop (32) to rest upwardly against the vehicle roof (18'); and **in that** the allowance compensator also includes a retention cage (27) of said nut, which is upwardly fixed to the reinforcement beam and clasps said nut.

9. Anchor according to claim 8, **characterized in that** it also comprises a ring (30) made of plastic material on the nut (9'), between said nut and the retention cage (27).

10. Anchor according to claim 8, **characterized in that** the nut (9') has in its upper part, around the central hole through which the binding screw (22) is inserted, a peripheral recess (31) on which the ring (30) is housed, being the depth of said recess smaller than the thickness of the ring.

## Patentansprüche

1. Verankerung für Dachgepäckträger, um diesen an das obere Verstärkungsblech (18) und das untere Verstärkungsblech (19) der Dachgepäckträgerseiten durch gegenüberliegende Löcher (20 und 21) der genannten Bleche zu befestigen, umfassend eine Mutter (23) unter dem unteren Blech (19) der Dachseite und eine Kopfschraube (22) welche, durch die Löcher (4) von jedem Dachgepäckträgerbalken (2), die Löcher (20 und 21) der Verstärkungsbleche (18 und 19) der Seiten, in die vorgenannte Mutter (23) eingeschraubt wird, und einen Toleranzausgleicher (7), welcher zwischen dem oberen Verstärkungsblech (18) und dem unteren Verstärkungsblech (19) der Seiten anzubringen ist und durch den die vorgenannte Schraube hindurchgeht; wobei der genannte Ausgleicher wiederum zwei koaxiale Gewindebuchsen umfasst, eine Obere (8) und eine Untere (9), und **dadurch gekennzeichnet, dass** der Ausgleicher ebenso einen oberen Kranz (10) aufweist, welcher an der Außenseite der oberen, äußeren Buchse (8) verankert ist und welcher auf Höhe des oberen Verstärkungsblechs der Seiten angebracht ist, mit Mitteln, um die axiale Bewegung desselben in Bezug auf das genannte obere Blech zu begrenzen; wobei die Länge der beiden Buchsen durch die relative Drehung zwischen Beiden, von einer eingefahrenen Stellung maximaler Kopplung aus, in welcher die genannte Länge kleiner als der Abstand zwischen dem oberen Verstärkungsblech (18) und dem unteren Verstärkungsblech (19) der Seiten ist, zu einer ausgefahrenen Stellung, in welcher die besetzte Länge gleich wie der Abstand zwischen den genannten Blechen ist, veränderbar ist, auf welche dieser in entgegengesetzten Richtungen durch den oberen Kranz (10) und die untere Buchse (9) ruht.

2. Verankerung nach Anspruch 1, **dadurch gekennzeichnet, dass** die untere Buchse (9) innerhalb der oberen Buchse (9) eingeschraubt ist.

3. Verankerung nach Anspruch 1, **dadurch gekennzeichnet, dass** der obere Kranz (10) eine zylindrische Wand (11) umfasst, welche an der Außenseite der oberen, äußeren Buchse (8) gekoppelt und mit Mitteln zur Befestigung desselben an die genannte Buchse versehen ist.

4. Verankerung nach Anspruch 3, **dadurch gekennzeichnet, dass** die Befestigungsmittel des oberen Kranzes (10) für die obere, äußere Buchse (8) aus Zungen (16) bestehen, dessen Radien aus dem Inneren der Kranzwand (11) hervorstehen und in einem peripheren, äußeren Kanal (17) der oberen, äußeren Buchse (8) eingeführt sind.

5. Verankerung nach Anspruch 1 bis 3, **dadurch gekennzeichnet, dass** die Mittel, welche die axiale Bewegung des oberen Kranzes (10) in Bezug auf das obere Verstärkungsblech (18) der Seiten begrenzen, aus einem peripheren Flügel (12) bestehen, welcher aus der zylindrischen Wand (11) des Kranzes (10), in einer an ihren oberen Rand angrenzenden Stellung, hervorsteht, und aus zwei diametral entgegengesetzten, zum oberen Flügel parallelen Laschen (13), welche in einer an den unteren Rand der genannten zylindrischen Wand angrenzenden Stellung hervorstehen; wobei der periphere Flügel nach unten auf das obere Verstärkungsblech (18) der Seiten ruht, um die Mittel zu definieren, welche die Abwärtsbewegung des Ausgleichers in der eingeschränkten Stellung der Buchsen verhindern; und wobei die Laschen (13) nach oben auf dasselbe Blech ruhen, wenn die Buchsen die vorgenannte ausgefahrene Stellung einnehmen, unter Definierung der Mittel, welche die Aufwärtsbewegung des Ausgleichers verhindern.

6. Verankerung nach Anspruch 1, **dadurch gekennzeichnet, dass** die untere, innere Buchse (9) innere, axiale Rillen (25) aufweist, um ein Werkzeug (27) zu koppeln, welches für die Rotation der genannten Buchse verwendet wird.

7. Verankerung nach Anspruch 1 bis 5, **dadurch gekennzeichnet, dass** die Öffnungen des oberen Verstärkungsblechs (18) der Seiten für den Durchgang der Verbindungsschraube länglich sind, mit entgegengesetzten Bereichen, welche eine maximale Breite bestimmen, welche mindestens gleich wie der Durchmesser des peripheren Flügels (12) der oberen Buchse (2) ist und mit entgegengesetzten Bereichen, welche jeweils die maximale und minimale Breiten definieren, die größer und kleiner als die von dem äußeren Rand der Laschen (13) des genannten oberen Kranzes (10) definierten Kontur sind.

8. Verankerung nach Anspruch 1, **dadurch gekennzeichnet, dass** die untere Buchse eine Mutter (9') umfasst, welche außerhalb der oberen Buchse (8) eingeschraubt ist und an dem unteren Verstärkungsblech (19) angebracht ist, in Übereinstimmung mit jedem Loch (21) für den Durchgang einer Verbindungsschraube (22); wobei die genannte obere Buchse (8) einen oberen, äußeren Anschlag (32) aufweist, um nach oben auf den Dachgepäckträger (18') zu ruhen; und dass der Toleranzausgleicher ebenso einen Haltekäfig (27) der genannten Mutter aufweist, welcher nach oben an dem Verstärkungsbalken befestigt ist und die genannte Mutter greift.

9. Verankerung nach Anspruch 8, **dadurch gekennzeichnet, dass** sie ebenso einen Ring (30) umfasst, welcher aus Kunststoffmaterial auf der Mutter (9'), zwischen der genannten Mutter und dem Haltekäfig (27), ausgeführt ist.

10. Verankerung nach Anspruch 8, **dadurch gekennzeichnet, dass** die Mutter (9') in ihrem oberen Teil, um das mittlere Loch herum, durch welches die Verbindungsschraube (22) eingeführt wird, eine periphere Ausnehmung (31) aufweist, in welcher der Ring (30) aufgenommen ist, wobei die Tiefe der genannten Ausnehmung kleiner als die Tiefe des Rings ist.

## Revendications

1. Ancrage pour galerie de toit de véhicule, pour fixer celle-ci aux plaques de renfort supérieure (18) et inférieure (19) des flancs du toit de véhicule, à travers des trous opposés (20 et 21) desdites plaques, comprenant un écrou (23) sous la plaque inférieure (19) du flanc du toit et une vis à tête (22) qui, à travers les trous (4) de chaque barre de galerie (2), les trous (20 et 21) des plaques de renfort (18 et 19) des flancs, est visée dans le dit écrou (23), et un compensateur de tolérances (7) situé entre lesdites plaques de renfort supérieure (18) et inférieure (19) des flancs et à travers lequel passe ladite vis; ledit compensateur comprend à son tour deux douilles filetées coaxiales, une supérieure (8) et une inférieure (9), et **caractérisé en ce que** le compensateur comporte également une couronne supérieure (10) ancrée à l'extérieur sur la douille extérieure supérieure (8) et située au niveau de la plaque de renfort supérieure des flancs, avec des moyens pour limiter son déplacement axial par rapport à ladite plaque supérieure ; la longueur des deux douilles étant variable par la rotation relative entre elles, à partir d'une position rentrée d'accouplement maximal, dans laquelle ladite longueur est inférieure à la distance entre les plaques de renfort supérieure (18) et inférieure (19) des flancs, et une position étendue, dans laquelle la longueur occupée est la même que la distance entre lesdites plaques, contre lesquelles il s'appuie dans des directions opposées à travers la couronne supérieure (10) et la douille inférieure (9).

2. Ancrage selon la revendication 1, **caractérisé en ce que** la douille inférieure (9) est vissée à l'intérieur de la douille supérieure (8).

3. Ancrage selon la revendication 1, **caractérisé en ce que** la couronne supérieure (10) comprend une paroi cylindrique (11) accouplée extérieurement à la douille extérieure supérieure (8) et pourvue de moyens pour fixer celle-ci à ladite douille.

4. Ancrage selon la revendication 3, **caractérisé en ce que** les moyen de fixation de la couronne supérieure (10) à la douille extérieure supérieure (8) consistent en des languettes (16) dont les rayons font saillie de l'intérieur de la paroi de couronne (11) et sont insérés dans un canal extérieur périphérique (17) de la douille extérieure supérieure (8).

5. Ancrage selon les revendications 1 et 3, **caractérisé en ce que** les moyens qui limitent le déplacement axial de la couronne supérieure (10), par rapport à la plaque de renfort supérieure (18) des flancs, consistent en une aile périphérique (12) qui fait saillie de la paroi cylindrique (11) de la couronne, dans une position attenante à son bord supérieur, et deux rabats (13) parallèles à l'aile supérieure, opposées diamétralement, faisant saillie dans une position attenante au bord inférieure de ladite paroi cylindrique ; dont l'aile périphérique s'appuie vers le bas contre la plaque de renfort supérieure (18) des flancs, pour définir les moyens qui évitent le déplacement descendant du compensateur, dans la position restreinte des douilles ; et dont les rabats (13) s'appuient vers le haut contre la même plaque, lorsque les douilles ont ladite position étendue, définissant les moyens qui évitent le déplacement ascendant du compensateur.

6. Ancrage selon la revendication 1, **caractérisé en ce que** la douille intérieure inférieure (9) a des rainures intérieures axiales (25) pour coupler un outil (27), lequel est utilisé pour faire tourner ladite douille.

7. Ancrage selon les revendications 1 et 5, **caractérisé en ce que** les ouvertures de la plaque de renfort supérieure (18) des flancs pour le passage de la vis de fixation sont oblongues, avec des zones opposées qui déterminent une largeur maximale qui est au moins égale au diamètre de l'aile périphérique (12) de la douille supérieure (2) et avec des zones opposées qui définissent les largeurs maximale et minimale supérieure et inférieure, respectivement, au contour défini par le bord extérieur des rabats (13) de ladite couronne supérieure (10).

8. Ancrage selon la revendication 1, **caractérisé en ce que** la douille inférieure comprend un écrou (9') qui est visé à l'extérieur de la douille supérieure (8) et est aménagé sur la plaque de renfort inférieure (19), coïncidant avec chaque trou (21) pour le passage d'une vis de fixation (22) ; ladite douille supérieure (8) ayant une buté supérieure extérieure (32) pour s'appuyer vers le haut contre le toit de véhicule (18') ; et **en ce que** le compensateur de tolérances comporte également une cage de rétention (27) dudit écrou, qui est fixée vers le haut à la barre de renfort et serre ledit écrou.

9. Ancrage selon la revendication 8, **caractérisé en ce qu'**il comprend en outre une bague (30) en matière plastique sur l'écrou (9'), entre ledit écrou et la cage de rétention (27).

10. Ancrage selon la revendication 8, **caractérisé en ce que** l'écrou (9') a sur sa partie supérieure, autour du trou central à travers lequel est insérée la vis de fixation (22), un évidemment périphérique (31) dans lequel est logée la bague (30), la profondeur dudit évidemment étant inférieure à l'épaisseur de la bague.
